# Europäisches Patentamt

## European Patent Office

## Office européen des brevets

(19)

(11) Publication number: **0 023 733**
**B1**

(12) **EUROPEAN PATENT SPECIFICATION**

(45) Date of publication of patent specification: **06.07.83**

(51) Int. Cl.³: **C 04 B 37/02, C 23 C 7/00**

(21) Application number: **80200669.2**

(22) Date of filing: **09.07.80**

(54) **Method for applying a dense, hard, adhesive and wear-resistant layer of cermets or ceramic material on a metal object.**

(30) Priority: **03.08.79 NL 7905973**

(43) Date of publication of application:
**11.02.81 Bulletin 81/6**

(45) Publication of the grant of the patent:
**06.07.83 Bulletin 83/27**

(84) Designated Contracting States:
**DE FR GB IT NL SE**

(56) References cited:
**FR - A - 1 434 158**
**FR - A - 2 363 436**
**GB - A - 1 367 762**

(73) Proprietor: **SKF Industrial Trading & Development Company B.V.**
**Kelvinbaan 16 P.O. Box 50**
**NL-3430 AB Nieuwegein (NL)**

(72) Inventor: **van Nederveen, Hans Bertil**
**Reelaan 23**
**Bosch en Duin (NL)**
Inventor: **Verburgh, Martin Bastiaan**
**Bisschopsweg 212**
**Amersfoort (NL)**

(74) Representative: **Merkelbach, B.**
**SKF Engineering & Research Centre B.V.**
**Kelvinbaan 16 P.O. Box 50**
**NL-3430 AB Nieuwegein (NL)**

Courier Press, Leamington Spa, England

# Method for applying a dense, hard, adhesive and wear-resistant layer of cermets or ceramic materials on a metal object.

The invention relates to a method for applying a dense, hard, solid and wear-resistant layer of cermets or cemented carbides on a metal object by spraying on a mixture of hard particles of a cermic material or a carbide and a bonding metal, followed by compression of the sprayed-on layer at high temperature and pressure.

-Such a method is disclosed in British Patent 1.451.113, where on the metal object is sprayed a layer of a metal or of an alloy which may contain ceramic materials or so-called cermets. This spraying-on of powdery materials, which are usually applied by flame spraying or plasma spraying, produces a porous layer. The adhesion of such a porous layer to the basic material is in many cases insufficient. To eliminate this problem, pursuant to the British patent the porous layer is compressed by melting the bonding metal present therein in a vacuum, whereby the porosity is kept to a minimum.

The invention now procures a method, of the type mentioned at the beginning, characterized in that a gas-tight metal foil is applied right over the sprayed-on layer and the structure so obtained is isostatically compressed at a pressure of between 500 and 2000 bar and a temperature of between 500° and 2000°C for a period of between eight hours and half an hour avoiding the bonding metal in the cermet or cemented carbide being melted, after which the metal foil is removed.

Application of the present method results in the obtention of a metal object with high density of the applied layer and greatly improved adhesion between the applied layer and the basic material.

The present method may be successfully used for the application of a dense, hard, adhesive and wear-resistant layer on metal objects of varying surface structure, namely, from a simple plain structure to complicated or fancy surface structures.

It is noted that French Patent 1.434.158 relates to a method for the application of, for example, a layer of nickel-chromium alloy on graphite as basic material, after which an aluminum layer is applied. Application of the layers is effected by spraying on. The whole is isostatically compressed while particles of graphite, provided by a metal layer which is not porous and which is watertight, are supplied. However, herein isostatic compaction takes place cold, in contrast to the method pursuant to the invention, where isostatic compaction is carried out at a relatively high temperature.

According to the British Patent 1.367.762 a method of producing a cermet material on a surface is applied by spraying. The heat treatment however takes the form of hot pressing or sintering which relates to different physical conditions as those applied in the claimed method.

A particularly great advantage of the present method is that compression in the case of hollow bodies, in particular pipes, takes place such that no variation in diameter occurs over the length of the pipe. Thus the present method is particularly suitable for the application of a dense, hard, adhesive and wear-resistant layer of cermet or ceramic material on metal pipes, which may then, after compression, be used without special subsequent processing, for example as bearing bushings, since the diameter over the length of the bushing is almost equally great.

When compression of the sprayed-on layer is performed pursuant to the invention, there is obtained a pipe with a diameter the size of which may be reproduceably controlled, depending upon the thickness of the sprayed-on layer and the pressure at which compression is effected.

Pursuant to the invention, prior to the application of a gastight metal foil $Al_2O_3$ preferably is aprayed on the layer already present. The $Al_2O_3$ herein serves as a so-called diffusion barrier and provides that no bond is effected between the metal foil and the coating, whereby the metal foil can be stripped off after compression. Omission of $Al_2O_3$ results in a more secure bond with the metal foil, no longer permitting ordinary stripping. In this case the metal foil is removed either by mechanical means, for example scouring, or by chemical means, for example by utilizing a suitable etching solution for the metal foil.

The metal foil is a gas-tight foil having a thickness of less than 0.5 mm, usually 0.1, 0.15 or 0.2 mm. For the present purposes use may be made of stainless steel or non-alloy steel $C_{15}$ (carbon content 0.15 wt.%, DIN 17210—69). The foil to be applied must withstand the temperature and pressure applied, where the melting point of the metal from which the foil is made must lie somewhat above the processing temperature, and moreover must not break down during processing. Further, use may be made of aluminum foil, copper foil or another metal depending upon the circumstances under which compression takes place.

The method pursuant to the invention is particularly suitable for applying a layer of tungsten carbide/cobalt on a forged, a cast or a sintered core or similar basic material. Cermets of other metals or ceramic materials, for example TiC or $Si_3N_4$, may alternatively be used. As bonding metal may be used a metal or an alloy consisting predominantly of Ni, Co, Fe or Cr. Preferably cobalt or an alloy of cobalt and nickel (Co/Ni) is used. The correct selection naturally also depends upon the basic material used, to which the applied layer must adhere well.

The layer is applied by spraying on a powdery mixture containing the bonding metal and the particles in the proportion desired for the layer. This spraying may be effected in the customary fashion, for example by flame-spraying or plasma spraying, where in either case a porous layer is formed. The objects may be coated entirely or only partially with the sprayed-on layer. Depending upon the desired layer thickness, the coating material will be applied in one or a plurality of layers. If desired, the successive layers may be given unlike compositions.

If necessary, the surface then may yet be smoothly finished. This may be avoided in most cases, however, for the roughness of the surface after compression is determined chiefly by the particle size of the pressure-transmitting medium. With adoption of the correct particle size the smoothness of the surface will in most cases be sufficient even without subsequent processing. A particle size of 0.10—0.25 mm is very satisfactory for many cases.

Pursuant to a preferred embodiment of the invention there is used for the sprayed-on layer a mixture having at least 70% by weight cermet particles and preferably a mixture consisting of 83—94% by weight tungsten carbide and alternatively of cobalt.

The thermal expansion coefficients of cermets or ceramic materials differ considerably from those of metals. To prevent the applied layers from springing loose as a result of thermal stresses during cooling at the end of the compression process, it is advisable preferably to allow the content of cermets or ceramic materials to vary in the direction of depth by applying the coating layer in two or more stages, while the content of bonding metal in the various sprayed-on layers is varied.

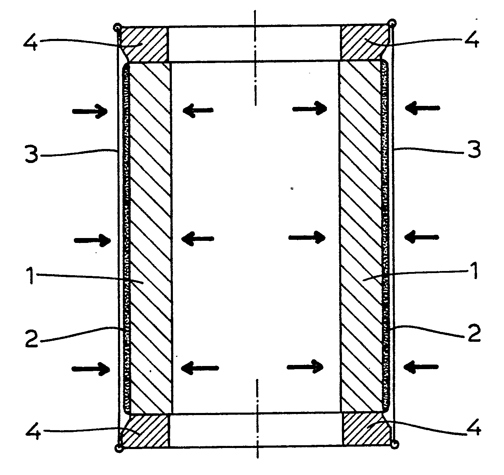

The invention will now be explained in greater detail by means of the figure.

The figure represents a preferred embodiment persuant to the invention, wherein a layer 2 is sprayed on a metal pipe 1.

After spraying on of the layer 2 clamp members 4 are fastened to the outer ends of the pipe. The clamp members 4 serve for stretching the foil 3 right above the sprayed-on layer 2. Then the assembly is transferred to a hot isostatic press and heated therein to the compression temperature, which is at least 500°C. Depending upon the basic material used, the layer sprayed on and the foil material, the temperature may lie between 500° and 2000°C. The temperature during this process is always such that compression itself proceeds in the solid phase. At this temperature the bonding metal is not melted, but sintering does indeed occur. At the same time as the temperature is raised or after the desired temperature has been reached, the gas pressure in the press is raised to at least 500 bar. The pressure may lie between 500 and 2000 bar. The foil is thereby pressed against the sprayed-on layer 2.

As a result of this temperature and pressure the layer 2 is compressed, thus moreover bringing about a diffusion bond with the basic material 1. This process lasts at least one-half hour, counting from when the compression temperature is reached to the beginning of cooling. The time required for processing, however, may lie between eight hours and one-half hour. After this the temperature and pressure are again allowed to return to ambient values and then the object is withdrawn from the press, after which the foil is removed.

In the event that the outermost layer of the sprayed-on layer 2 is $Al_sO_3$, the foil 3 may easily be stripped off, because $Al_2O_3$ acts as a so-called diffusion barrier between the underlying layer and the foil, the foil resting loose on the layer.

If no $Al_2O_3$ is used, removal of the foil is more laborious, since herein a bond is effected between the foil 3 and the sprayed-on layer 2. In this case the foil 3 is removed by chemical means, for example, by etching.

After removal of the clamp members 4 a coated pipe is obtained having a diameter which is almost equal everywhere over the length of the pipe and therefore is extremely suitable as bearing bushing.

It is self-evident that the invention is not limited to the embodiment represented in the figure.

**Claims**

1. Method for applying a dense, hard, adhesive and wear-resistant layer of cermets or cemented carbides on a metal object by spraying on a mixture of hard particles of a ceramic material or a carbide and a bonding metal, followed by compression of the sprayed-on layer at relatively high temperature and pressure, characterized in that a gas-tight metal foil is applied right over the sprayed-on layer and the structure so obtained is isostatically compressed at a pressure of between 500 and 2000 bar and a temperature of between 500° and 2000°C for a period of between eight hours and half an hour avoiding the bonding metal in the cermet or cemented carbide being melted, after which the metal foil is removed.

2. Method according to claim 1, characterized in that, prior to the application of a gas-tight metal foil, $Al_2O_3$ is sprayed on the layer of the mixture already present.

3. Method according to claim 1 or 2, characterized in that a foil having a thickness of 0.1—0.2 mm is used.

4. Method according to claims 1—3, characterized in that as foil is used aluminum foil.

5. Method according to claims 1—3, characterized in that as foil is used non-alloy steel $C_{15}$ (carbon content 0.15 wt.%, DIN 17210—69).

6. Method according to claims 1—5, characterized in that the metal foil is removed by mechanical means.

7. Method according to claim 6, characterized in that the metal foil is scoured off.

8. Method according to claims 1—5, characterized in that the metal foil is removed by chemical means.

9. Method according to claim 8, characterized in that the metal foil is removed by etching.

10. Method according to claims 1—9, characterized in that a layer containing ceramic particles is sprayed on.

11. Method according to claims 1—9, characterized in that a layer containing cermet particles is sprayed on.

12. Method according to claims 1—11, characterized in that for the sprayed-on layer is used a mixture with at least 70% by weight of ceramic or carbide particles, for example tungsten carbide.

13. Method according to claim 12, characterized in that a sprayed-on layer containing 83—94% by weight tungsten carbide and for the remainder, cobalt, is applied.

14. Method according to claims 1—13, characterized in that the coating layer is applied in two or more steps, while the content of bonding metal in the sprayed-on layer is varied such that springing off of the layer by difference in coefficient of expansion is prevented.

## Revendications

1. Procédé pour appliquer sur un objet métallique une couche dense, dure, adhérente et résistant à l'usure, en cermets ou carbures cémentés, par projection d'un mélange de particules dures d'un matériau céramique ou d'un carbure et d'un métal de liaison, suivie d'une compression à haute température et sous pression élevée, de la couche projetée, ce procédé étant caractérisé en ce qu'une feuille métallique étanche aux gaz est appliquée juste au-dessus de la couche projetée; et en ce que la structure ainsi obtenue est comprimée isostatiquement sous une pression de 500 à 2 000 bars et à une température de 500 à 2 000°C pendant une période de huit heures à une demi-heure, ce qui évite la fusion du métal de liaison présent dans le cermet ou le carbure cémenté, après quoi la feuille métallique est enlevée.

2. Procédé suivant la revendication 1, caractérisé en ce que, préalablement à l'application d'une feuille métallique étanche aux gaz, de l'alumine ($Al_2O_3$) est projetée sur la couche de mélange déjà présente.

3. Procédé suivant l'une des revendications 1 ou 2, caractérisé en ce que la feuille utilisée a une épaisseur comprise entre 0,1 et 0,2 mm.

4. Procédé suivant les revendications 1 à 3, caractérisé en ce que la feuille utilisée est une feuille d'aluminium.

5. Procédé suivant les revendications 1 à 3, caractérisé en ce que la feuille utilisée est une feuille d'acier non allié $C_{15}$ (teneur en carbone 0,15 % en poids, DIN 17 210—69).

6. Procédé suivant les revendications 1 à 5, caractérisé en ce que la feuille métallique est enlevée par un moyen mécanique.

7. Procédé suivant la revendication 6, caractérisé en ce que la feuille métallique est enlevée par décapage.

8. Procédé suivant l'une des revendications 1 à 5, caractérisé en ce que la feuille métallique est enlevée par un moyen chimique.

9. Procédé suivant la revendication 8, caractérisé en ce que la feuille est enlevée par attaque chimique.

10. Procédé suivant les revendications 1 à 9, caractérisé en ce qu'une couche contenant des particules de céramique est projetée.

11. Procédé suivant les revendications 1 à 9, caractérisé en ce qu'une couche contenant des particules de cermet est projetée.

12. Procédé suivant les revendications 1 à 11, caractérisé en ce que la couche projetée est un mélange contenant au moins 70 % en poids de particules de céramique ou de particules de carbure, par exemple de carbure de tungstène.

13. Procédé suivant la revendication 12, caractérisé en ce qu'une couche projetée contenant de 83 à 94 % en poids de carbure de tungstène et, pour le reste, de cobalt, est appliquée.

14. Procédé suivant les revendications 1 à 13, caractérisé en ce que la couche de revêtement est appliquée en deux ou plusieurs stades, la teneur en métal de liaison dans la couche projetée variant de manière à empêcher un décrochage brusque de la couche provoqué par la différence de coefficient de dilatation.

## Patentansprüche

1. Verfahren zum Auftragen einer dichten, harten, festhaftenden und verschleißbeständigen Kermet- oder Carbidhartmetallschicht auf einen metallischen Gegenstand durch Aufspritzen einer Mischung harter Teilchen aus einem keramischen Material oder einem Karbid und einem Bindemetall mit nachfolgender Kompression der aufgespritzten Schicht bei verhältnismäßig hohen Temperaturen und Drücken, dadurch gekennzeichnet, daß unmittelbar über der aufgespritzten Schicht eine gasdichte Metallfolie angebracht wird und die auf diese Weise erhaltene Einheit isostatisch komprimiert wird bein einem Druck zwischen 500 und 2000 bar und einer Temperatur zwischen 500° und 2000 °C während einer Zeitdauer zwischen acht Stunden und einer halben Stunde, wobei das Schmelzen des Bindemetalls im Kermet oder Carbidhartmetall vermieden wird, und daß danach die Metallfolie entfernt wird.

2. Verfahren nach Anspruch 1, dadurch gekennzeichnet, daß vor der Anbringung einer gasdichten Metallfolie $Al_2O_3$ auf die schon vorhandene Schicht der genannten Mischung gespritzt wird.

3. Verfahren nach Anspruch 1 oder 2, dadurch gekennzeichnet, daß eine Folie mit einer Dicke von 0,1—0,2 mm benutzt wird.

4. Verfahren nach den Ansprüchen 1—3, dadurch gekennzeichnet, daß als Folie eine Aluminiumfolie benutzt wird.

5. Verfahren nach den Ansprüchen 1—3, dadurch gekennzeichnet, daß als Folie eine solche aus unlegiertem Stahl $C_{15}$ (Kohlenstoffgehalt 0,15 Gew%, DIN 17210—69) benutzt wird.

6. Verfahren nach den Ansprüchen 1—5, dadurch gekennzeichnet, daß die Metallfolie mit mechanischen Mitteln entfernt wird.

7. Verfahren nach Anspruch 6, dadurch gekennzeichnet, daß die Metallfolie abgeschabt wird.

8. Verfahren nach Ansprüchen 1—5, dadurch gekennzeichnet, daß die Metallfolie durch chemische Mittel entfernt wird.

9. Verfahren nach Anspruch 8, dadurch gekennzeichnet, daß die Metallfolie durch Ätzen entfernt wird.

10. Verfahren nach den Ansprüchen 1—9, dadurch gekennzeichnet, daß eine Schicht aufgespritzt wird, die keramische Teilchen enthält.

11. Verfahren nach Ansprüchen 1—9, dadurch gekennzeichnet, daß eine Schicht aufgespritzt wird, die Kermet-Teilchen enthält.

12. Verfahren nach Ansprüchen 1—11, dadurch gekennzeichnet, daß für die aufgespritzte Schicht eine Mischung mit wenigstens 70 Gew% Keramik- oder Karbidteilchen, z.B. Wolframkarbid, benutzt wird.

13. Verfahren nach Anspruch 12, dadurch gekennzeichnet, daß eine aufgespritzte Schicht, welche 83—94 Gew% Wolframkarbid und im übrigen Kobalt enthält, aufgebracht wird.

14. Verfahren nach Ansprüchen 1—13, dadurch gekennzeichnet, daß die deckende Schicht in zwei oder mehr Arbeitsschritten aufgebracht wird, wobei der Gehalt an Bindemetall in der aufgespritzten Schicht so verändert wird, daß Abplatzen der Schicht infolge unterschiedlicher Ausdehnungskoeffizienten verhindert wird.